# EUROPÄISCHE PATENTSCHRIFT

(11) **EP 3 538 315 B1**
(45) Veröffentlichungstag und Bekanntmachung des Hinweises auf die Patenterteilung: **29.06.2022**
(21) Anmeldenummer: 18702086.2
(22) Anmeldetag: 10.01.2018
(51) Int. Cl.: B23K 26/40, B23H 9/00, B23H 9/10, B23H 9/14, F01D 5/14, B23K 26/382, B23K 101/00, B23K 103/18

(54) **VERFAHREN ZUR HERSTELLUNG EINES HOHLRAUMS IN EINER SCHAUFELPLATTFORM ; ENTSPRECHENDER SCHAUFEL**
METHOD OF PRODUCING A CAVITY IN A BLADE PLATFORM ; CORRESPONDING BLADE
PROCÉDÉ DE FABRICATION D'UN ESPACE CREUX DANS UNE PLATE-FORME D'AUBE ; AUBE CORRESPONDANTE

(30) Priorität: 23.01.2017 EP 17152629
(43) Veröffentlichungstag der Anmeldung: 18.09.2019
(73) Patentinhaber: Siemens Energy Global GmbH & Co. KG, 81739 München (DE)
(72) Erfinder: AHMAD, Fathi, 41564 Kaarst (DE); KOCH, Daniela, 10439 Berlin (DE); LEMPKE, Markus, 45468 Mülheim (DE); MATTHEIS, Thorsten, 45473 Mülheim (DE); PODSCHWADEK, Axel, 45964 Gladbeck (DE); RADULOVIC, Radan, 44799 Bochum (DE); WEIDENMÜLLER, Anne, 40215 Düsseldorf (DE)
(86) Internationale Anmeldenummer: PCT/EP2018/050511
(87) Internationale Veröffentlichungsnummer: WO 2018/134093

(56) Entgegenhaltungen:
- JP-A- 2000 000 720
- US-A- 3 041 442
- US-A- 5 313 038
- US-A1- 2007 077 144
- US-A1- 2011 070 096
- US-A1- 2011 217 180

## Beschreibung

Die vorliegende Erfindung betrifft ein Verfahren zur Herstellung eines Hohlraums in einer Schaufelplattform einer Schaufel, insbesondere einer Turbinenschaufel, sowie eine Schaufel mit einem solchen Hohlraum.

Turbinenschaufeln einschließlich ihrer Schaufelblätter und Schaufelplattformen sind während ihres bestimmungsgemäßen Einsatzes in einer Gasturbine sehr hohen Temperaturen ausgesetzt. Entsprechend werden diese normalerweise unter Verwendung eines Kühlfluids gekühlt. Zur Kühlung von Schaufelplattformen müssen in diesen Hohlräume ausgebildet werden, durch die das eingesetzte Kühlfluid geleitet werden kann. Zur Herstellung solcher Hohlräume sind derzeit unterschiedliche Verfahren bekannt.

Zum einen können die Hohlräume bereits während des Gießprozesses von Schaufelplattformen unter Verwendung entsprechender Gießkerne erzeugt werden. Allerdings weist eine Schaufelplattform nach dem Gießprozess zwangsläufig eine Vielzahl mitunter sehr großer Öffnungen auf, die auf die notwendige Fixierung des Gießkerns innerhalb der Gießform zurückzuführen und zur nachträglichen Entfernung des Gießkernmaterials auch erforderlich sind. Nach dem Entfernen des Gießkernmaterials werden solche Öffnungen dann meist unter Einsatz eines Löt- oder Schweißverfahrens verschlossen oder zumindest derart verkleinert, dass während des bestimmungsgemäßen Einsatzes der Turbinenschaufel ein unkontrolliertes Austreten von Kühlfluid durch die Öffnungen verhindert wird. Ein Problem besteht allerdings dahingehend, dass Turbinenschaufeln einschließlich ihrer Plattformen häufig aus schwer löt- und schweißbaren, auf Nickel basierenden Superlegierungen hergestellt sind, weshalb sich ein Verschließen der Öffnungen meist schwierig gestaltet.

Alternativ können Hohlräume auch nachträglich in bereits gegossene Schaufelplattformen eingebracht werden, insbesondere unter Einsatz von Bohr- und/oder Funkenerosionsverfahren. Bei der Herstellung größerer Hohlräume, wie sie für eine ordnungsgemäße Kühlung einer Schaufelplattform erforderlich sind, gehen aber auch diese Verfahren normalerweise mit der Erzeugung verhältnismäßig großer Öffnungen einher, die ebenfalls löt- oder schweißtechnisch verschlossen werden müssen, weshalb sich eine ähnliche Problematik wie bei der gießtechnischen Herstellung von Hohlräumen ergibt.

Um die verhältnismäßig großen Öffnungen in Schaufelplattformen zu vermeiden, ist es aus der US 2011/0070096A1 (Basis des Oberbegriffs der Ansprüche 1 und 9) bekannt, kreisbogenförmig gekrümmte Elektroden auf einer entsprechenden Kreisbahn durch die Plattform einer Schaufel hindurchzuführen und somit kreisbogenförmige Kühlkanäle herzustellen. Nachteilig sind hier jedoch das Bereitstellen eines eigens dafür verwendbaren aufwendigen Werkzeugs sowie die Tatsache, dass keine beliebigen bzw. auf lokale Kühlanforderungen abstimmbare Kühlkanäle oder gar Kühlbereiche damit herstellbar sind.

Darüber hinaus ist es aus der JP 2000-000720 A bekannt, mit Hilfe eines gekröpften Führungsrohres einer Erodiermaschine dessen Elektrode innerhalb eines Werkstückes so umzubiegen, dass Hinterschneidungen erodiert werden können. Aufgrund des gekröpften Führungsrohres ergeben sich vergleichsweise große Zuführöffnungen im Werkstück, weshalb auch damit das Problem der ungewünscht großen Öffnungen nicht gelöst wurde. Ausgehend von diesem Stand der Technik ist es eine Aufgabe der vorliegenden Erfindung, ein alternatives Verfahren der eingangs genannten Art zu schaffen, das die zuvor beschriebenen Nachteile zumindest teilweise beseitigt.

Zur Lösung dieser Aufgabe schafft die vorliegende Erfindung ein Verfahren zur Herstellung eines Hohlraums in einer Schaufelplattform einer Schaufel, insbesondere einer Turbinenschaufel als Teil eines Schaufelplattformkühlsystems, wobei das Verfahren die Schritte aufweist: a) Herstellen einer ersten Bohrung ausgehend von einer ersten Plattformseitenfläche in Richtung einer gegenüberliegenden zweiten Plattformseitenfläche unter Erzeugung einer ersten Öffnung in der ersten Plattformseitenfläche und b) fächerartiges Aufweiten der ersten Bohrung mittels eines Funkenerosionsverfahrens unter Verwendung einer draht- oder stabförmigen starren Elektrode, derart, dass die in Schritt a) erzeugte erste Öffnung der ersten Bohrung den Ausgangspunkt der fächerartigen Aufweitung darstellt.

Die in Schritt a) hergestellte Bohrung kann grundsätzlich mit jedem beliebigen Bohrverfahren hergestellt werden, wobei bevorzugt auch hier ein Funkenerosionsverfahren eingesetzt wird. Die sich in Schritt b) erfindungsgemäß anschließende fächerartige Aufweitung der ersten Bohrung derart, dass die in Schritt a) erzeugte erste Öffnung der ersten Bohrung den Ausgangspunkt der fächerartigen Aufweitung darstellt, führt dazu, dass ein vergleichsweise großer Hohlraum erzeugt werden kann, während die erste Öffnung der ersten Bohrung wenn überhaupt nur geringfügig aufgeweitet wird. Eine derart kleine Bohrung kann auch bei schwer löt- und/oder schweißbaren Werkstoffen verhältnismäßig problemlos verschlossen werden. Sie kann aufgrund ihrer geringen Größe aber auch unverschlossen bleiben und insbesondere als Kühlfluidauslassöffnung für das durch den Hohlraum geleitete Kühlfluid dienen.

Gemäß einer ersten Ausgestaltung des erfindungsgemäßen Verfahrens wird in Schritt b) ausgehend von der ersten Öffnung der ersten Bohrung eine Vielzahl weiterer Bohrungen erzeugt, die jeweils einen vorbestimmten Winkelversatz zueinander aufweisen, wobei benachbart angeordnete Bohrungen einander bereichsweise überlappen. Auf diese Weise wird ausgehend von der ersten Öffnung der ersten Bohrung eine Vielzahl sich strahlenartig erstreckender und fluidtechnisch miteinander verbundenen Bohrungen erzeugt, die gemeinsam einen Hohlraum definieren.

Gemäß einer alternativen Ausgestaltung des erfindungsgemäßen Verfahrens wird in Schritt b) die in die erste Öffnung der ersten Bohrung eingeführte starre Elektrode fächerartig nach Art eines Scheibenwischers geschwenkt bzw. bewegt. Auf diese Weise wird ein kreissegmentförmiger und damit ebenfalls fächerartiger Hohlraum hergestellt.

Vorteilhaft gehen die Tiefe der ersten Bohrung und ggf. der weiteren Bohrungen jeweils über eine gedachte Mittelebene zwischen der ersten Plattformseitenfläche und der zweiten Plattformseitenfläche hinaus. Entsprechend erstreckt sich der ausgehend von der ersten Öffnung erzeugte Hohlraum über mehr als die Hälfte der Schaufelplattformbreite an entsprechender Stelle.

Gemäß einer Ausgestaltung des erfindungsgemäßen Verfahrens wird eine Bohrung hergestellt, die eine zweite Öffnung in der ersten Plattformseitenfläche und/oder in der zweiten Plattformseitenfläche erzeugt und sich ausgehend von dieser zweiten Öffnung in Richtung der gegenüberliegenden Plattformseitenfläche erstreckt, wobei die Bohrung mittels eines Funkenerosionsverfahrens, insbesondere unter Verwendung einer starren Drahtelektrode, derart fächerartig aufgeweitet wird, dass die zweite Öffnung den Ausgangspunkt der fächerartigen Aufweitung darstellt. Die hier erzeugte Bohrung kann zeitgleich mit der in Schritt a) hergestellten Bohrung erzeugt werden, indem die in Schritt a) erzeugte Bohrung als eine Durchgangsbohrung ausgebildet wird, die sich von der ersten Plattformseitenfläche zu der gegenüberliegenden zweiten Plattformseitenfläche erstreckt, insbesondere senkrecht zur zuvor genannten Mittelebene der Schaufelplattform. Alternativ kann die hier erzeugte Bohrung aber auch als separate zweite Bohrung ausgehend von der zweiten Plattformseitenfläche in die Schaufelplattform eingebracht werden. Anschließend wird die Bohrung analog zu Schritt b) mittels eines Funkenerosionsverfahrens, insbesondere unter Verwendung einer starren Drahtelektrode, derart fächerartig aufgeweitet, dass die zweite Öffnung den Ausgangspunkt der fächerartigen Aufweitung darstellt.

Im Rahmen der fächerartigen Aufweitung wird ausgehend von der in der zweiten Plattformseitenfläche bzw. in der zweiten Plattformseitenfläche erzeugten zweiten Öffnung bevorzugt eine Vielzahl weiterer Bohrungen erzeugt, die jeweils einen vorbestimmten Winkelversatz zueinander aufweisen, wobei benachbart angeordnete Bohrungen einander bereichsweise überlappen. Alternativ kann im Rahmen der fächerartigen Aufweitung die ausgehend von der zweiten Öffnung in die Bohrung eingeführte Elektrode aber auch fächerartig geschwenkt werden. Beide Varianten wurden zuvor bereits erläutert, weshalb hierauf nicht erneut eingegangen wird.

Vorteilhaft gehen die Tiefe der Bohrung bzw. der Bohrungen jeweils über eine gedachte Mittelebene zwischen der zweiten Plattformseitenfläche und der ersten Plattformseitenfläche hinaus, so dass sich der ausgehend von der zweiten Öffnung erzeugte Hohlraum über mehr als die Hälfte der Schaufelplattformbreite erstreckt.

Insbesondere definieren die von den gleichen und/oder unterschiedlichen Plattformseitenflächen durchgeführten fächerartigen Aufweitungen einen gemeinsamen Hohlraum, indem die beidseitig eingebrachten Bohrungen bzw. fächerartig aufgeweiteten Bereiche einander schneiden bzw. überlappen.

Die Schaufelplattform ist bevorzugt aus einer Superlegierung hergestellt, insbesondere aus einer auf Nickel basierenden Superlegierung.

Ferner schafft die vorliegende Erfindung zur Lösung der eingangs genannten Aufgabe eine Schaufel, insbesondere Turbinenschaufel, mit einem Schaufelblatt und zumindest einer mit dem Schaufelblatt verbundenen Schaufelplattform, in der zumindest ein Hohlraum ausgebildet ist, wobei der zumindest eine Hohlraum einen Teil eines Schaufelplattformkühlsystems bildet, dadurch gekennzeichnet, dass der Hohlraum entweder eine im Wesentlichen dreieckige oder eine im Wesentlichen rautenförmige oder eine im Wesentlichen sternförmige Außenkontur aufweist. Derartige Außenkonturen ergeben sich insbesondere, wenn der Hohlraum unter Einsatz des zuvor beschriebenen erfindungsgemäßen Verfahrens hergestellt wird.

Bevorzugt definiert zumindest einer der durch aufeinandertreffende Seitenwände des zumindest einen Hohlraums gebildeten Eckbereiche eine Öffnung in einer Plattformseitenfläche. Eine solche Öffnung ergibt sich automatisch bei der Herstellung des Hohlraums unter Einsatz des erfindungsgemäßen Verfahrens.

Gemäß einer Ausgestaltung der vorliegenden Erfindung ist der zumindest eine Hohlraum fluidtechnisch mit einem Schaufelblatthohlraum verbunden, der normalerweise ebenfalls einen Teil eines Schaufelplattformkühlsystems darstellt.

Vorteilhaft ist zumindest die Schaufelplattform aus einer Superlegierung hergestellt, insbesondere aus einer auf Nickel basierenden Superlegierung.

Weitere Merkmale und Vorteile der vorliegenden Erfindung werden anhand der nachfolgenden Beschreibung verschiedener Ausführungsformen erfindungsgemäßer Schaufeln und Verfahren unter Bezugnahme auf die beiliegende Zeichnung deutlich.

Darin ist
- Figur 1: eine schematische perspektivische Teilansicht einer Schaufelplattform einer Turbinenschaufel, in die ein Hohlraum als Teil eines Schaufelplattformkühlsystems eingebracht werden soll, wobei die Schaufelplattform durchsichtig dargestellt ist und die normalerweise verdeckten Linien gestrichelt gezeichnet sind;
- Figur 2: eine Ansicht entsprechend Figur 1, die einen Zustand nach Durchführung eines ersten Verfahrensschrittes eines erfindungsgemäßen Verfahrens zeigt;
- Figur 3: eine Ansicht entsprechend den Figuren 1 und 2, die eine Ansicht nach Durchführung eines zweiten Verfahrensschrittes des erfindungsgemäßen Verfahrens zeigt;
- Figur 4: eine Ansicht entsprechend den Figuren 1, 2 und 3, die eine Ansicht nach Durchführung eines dritten Verfahrensschrittes des erfindungsgemäßen Verfahrens zeigt;
- Figur 5: eine Draufsicht der in Figur 4 dargestellten Schaufelplattform;
- Figur 6: eine Draufsicht analog Figur 5, die eine alternative Form eines Hohlraums zeigt, der mit einem erfindungsgemäßen Verfahren herstellt wurde; und
- Figur 7: eine Draufsicht analog zu Figur 5, die noch eine weitere alternative Form eines Hohlraums zeigt, der mit einem erfindungsgemäßen Verfahren herstellt wurde.

Gleiche Bezugsziffern beziehen sich nachfolgend auf gleiche oder gleichartige Bauteile.

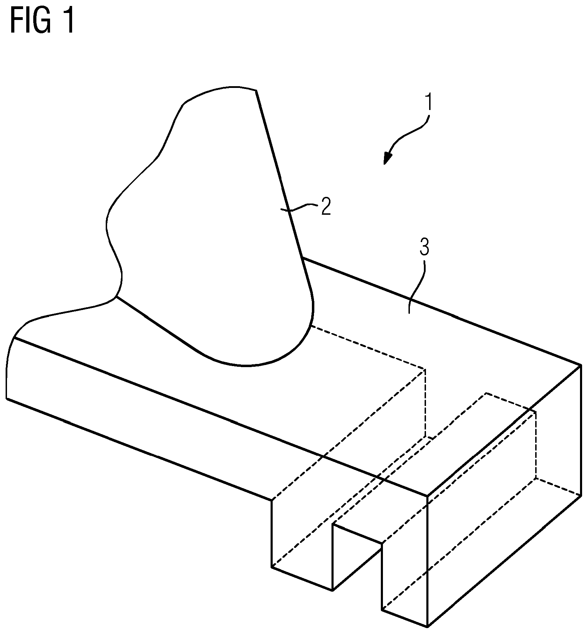

Die Figuren 1 bis 5 zeigen eine Schaufel 1, bei der es sich vorliegend um eine Turbinenschaufel handelt, genauer gesagt um eine Turbinenleitschaufel. Die Schaufel 1, die einteilig aus einer Superlegierung hergestellt ist, insbesondere aus einer solchen auf Nickelbasis, umfasst ein Schaufelblatt 2 und zumindest eine mit dem Schaufelblatt 2 verbundene Schaufelplattform 3.

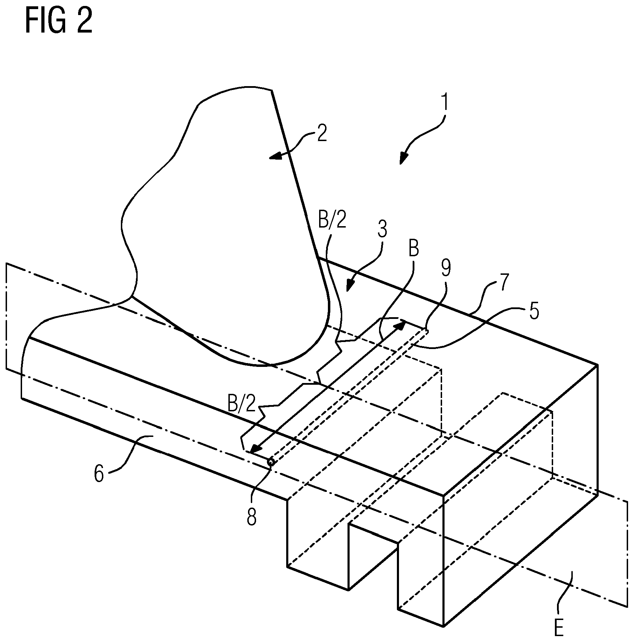

Zur Kühlung der Schaufelplattform 3 soll in den vorderen Bereich ein Hohlraum 4 eingebracht werden, der einen Teil eines Schaufelplattformkühlsystems bildet. Hierzu wird in einem ersten Schritt, wie es in Figur 2 dargestellt ist, eine erste Bohrung 5 ausgehend von einer ersten Plattformseitenfläche 6 in Richtung einer gegenüberliegenden zweiten Plattformseitenfläche 7 unter Erzeugung einer ersten Öffnung 8 in der ersten Plattformseitenfläche 6 und einer zweiten Öffnung 9 in der zweiten Plattformseitenfläche 7 hergestellt. Zur Einbringung der ersten Bohrung 5, die sich vorliegend senkrecht zu einer gedachten Mittelebene E zwischen der ersten und zweiten Plattformseitenfläche 6 und 7 erstreckt, kann grundsätzlich jedes geeignete Bohrverfahren eingesetzt werden. Im vorliegenden Fall wird ein Funkenerosionsverfahren mit draht- oder stabförmiger starrer Elektrode 10 eingesetzt.

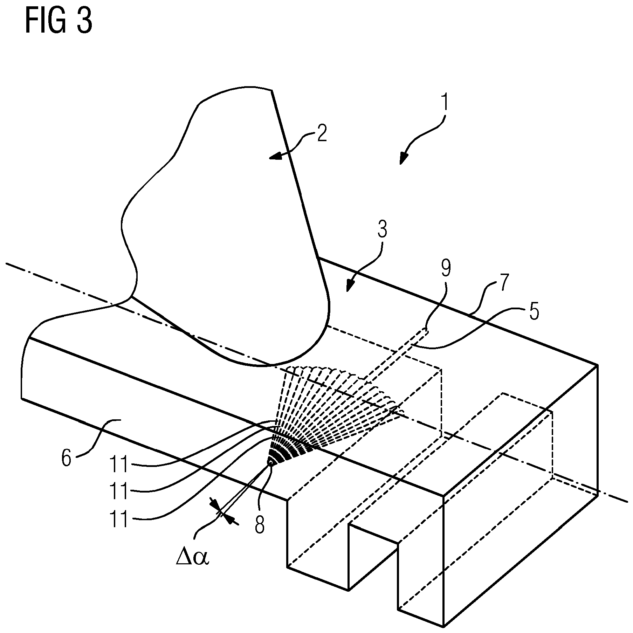

In einem zweiten Schritt wird die erste Bohrung 5 gemäß Figur 3 derart fächerartig aufgeweitet, dass die im ersten Schritt erzeugte erste Öffnung 8 der ersten Bohrung 5 den Ausgangspunkt der fächerartigen Aufweitung darstellt. Hierzu wird ausgehend von der ersten Öffnung 8 der ersten Bohrung 5 eine Vielzahl weiterer Bohrungen 11 erzeugt, die jeweils einen vorbestimmten Winkelversatz Δα in der Größenordnung von bevorzugt 0,5°-5° zueinander aufweisen, je nach Stärke der verwendeten Elektrode in Relation zum Winkelradius wobei benachbart angeordnete Bohrungen 5, 11 einander bereichsweise überlappen. Mit anderen Worten wird die geradlinige Elektrode 10 in stochernder Art und Weise immer wieder unter leicht verändertem Winkel durch die erste Öffnung 8 der ersten Bohrung 5 zur Erzeugung einer weiteren Bohrung 11 eingeführt, wobei die Tiefe der Bohrungen 11 je nach Bedarf jeweils über die Mittelebene E zwischen den beiden Plattformseitenflächen 6 und 7 hinausgeht. Trotz unterschiedlicher Einführwinkel der Elektrode 10 in Bezug auf die betreffende Plattformseitenfläche weitet sich die Größe der ersten Öffnung 8 wenn überhaupt nur geringfügig auf. Auf diese Weise ergibt sich ein Teilhohlraum mit der in Figur 3 schematisch dargestellten fächer- oder kreissegmentartigen Form.

Ein Teilhohlraum mit analoger oder zumindest sehr ähnlicher Form kann alternativ auch erzielt werden, indem im Rahmen des zweiten Schrittes die in die erste Öffnung 8 der ersten Bohrung 5 eingeführte Elektrode 10 fächerartig geschwenkt wird. Entsprechend ist der entstehende Teilhohlraum nicht das Ergebnis einer Vielzahl von Einzelbohrungen sondern das Ergebnis einer scheibenwischerartigen Schwenkbewegung der Elektrode 10 um den Mittelpunkt der ersten Öffnung 8 als Schwenkpunkt.

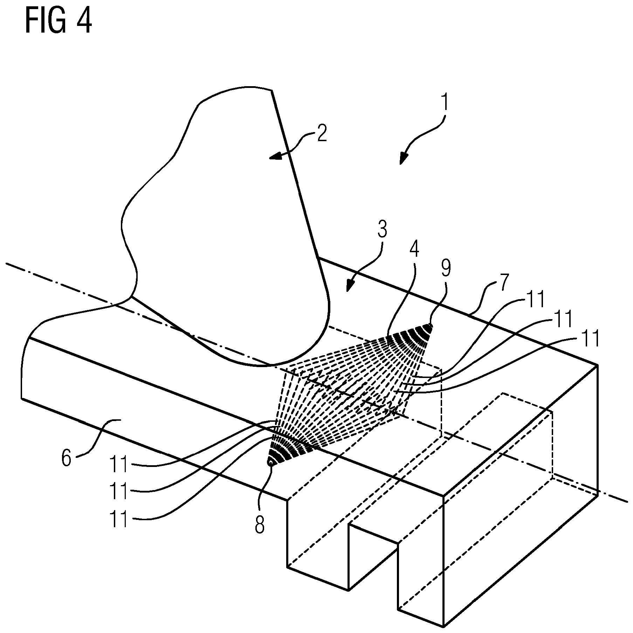

In einem dritten Schritt wird, wie es in Figur 4 dargestellt ist, in zum zweiten Schritt analoger Weise ein weiterer Teilhohlraum ausgehend von der zweiten Öffnung 9 der ersten Bohrung 5 hergestellt, also ausgehend von der zweiten Plattformseitenfläche 7, und zwar derart, dass sich die Bohrungen 11 der beiden Teilhohlräume kreuzen bzw. die Teilhohlräume einander überlappen. Insgesamt wird auf diese Weise ein Hohlraum 4 mit im Wesentlichen rautenförmiger Außenkontur erzeugt, der über die an der ersten Plattformseitenfläche 6 vorgesehene erste Öffnung 8 und die an der zweiten Plattformseitenfläche 7 vorgesehene zweite Öffnung 9 von außen zugänglich ist.

Die Öffnungen 8 und 9 können in einem sich anschließenden Schritt nach Bedarf verschlossen werden, insbesondere mittels Lötens oder Schweißens. Alternativ können sie jedoch auch als Kühlfluidaustrittsöffnungen zur Kühlung der Plattformseitenflächen 6 und 7 verbleiben.

Der Hohlraum 4 kann über die Ausbildung eines oder mehrerer Verbindungskanäle 12 mit einem Hohlraum des Schaufelblattes 2 verbunden werden, um insbesondere Kühlfluid von dem Inneren des Schaufelblattes 2 in den Hohlraum 4 der Schaufelplattform 3 und von dort über die Öffnungen 8 und 9 nach außen zu leiten.

Das zuvor beschriebene Verfahren zeichnet sich insbesondere dadurch aus, dass die beiden Öffnungen 8 und 9, die bei der Herstellung der ersten Bohrung 5 erzeugt werden, während der fächerartigen Aufweitung der ersten Bohrung 5 nicht wesentlich vergrößert werden. Sie bleiben verhältnismäßig klein. Ihr Durchmesser liegt nach der Herstellung des Hohlraums 4 bevorzugt im Bereich von 1 bis 5 mm Dank dieser geringen Größe ist ein Verschließen unter Einsatz eines Löt- oder Schweißverfahrens selbst bei schwer schweißbarem Werkstoff eher unproblematisch. Auch ist es aufgrund ihrer geringen Größe möglich, die Öffnungen 8 und 9 als Kühlfluidauslassöffnungen zu belassen, was bei den eingangs beschriebenen bekannten Verfahren zur Herstellung eines Hohlraums in einer Schaufelplattform undenkbar wäre.

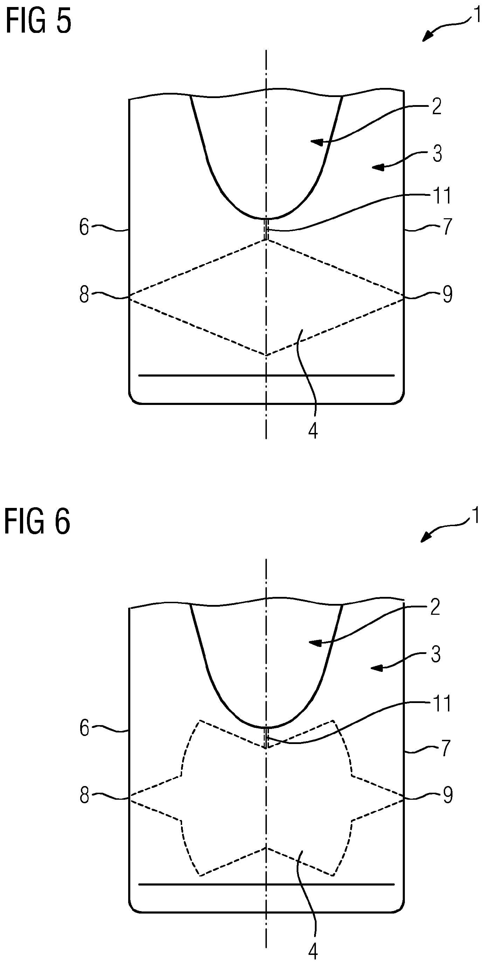

Figur 6 zeigt eine alternative Außenkontur des Hohlraums 4, die sich bei Durchführung der zuvor genannten Verfahrensschritte ergeben kann. Die Außenkontur des Hohlraums 4 in Figur 6 ist im Wesentlichen sternförmig, was darauf zurückzuführen ist, dass verglichen mit den Figuren 3 und 4 zur Aufweitung der ersten Bohrung 5 etwas längere Elektroden 10 verwendet wurden.

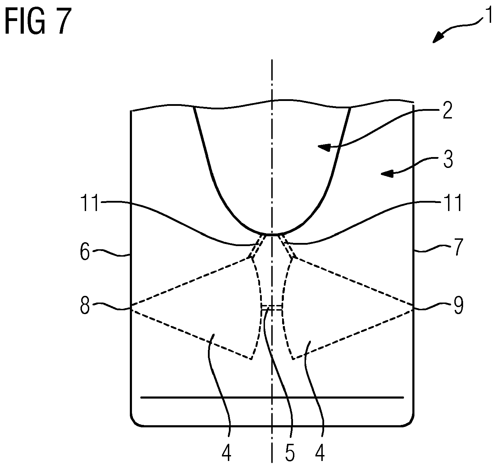

Figur 7 zeigt eine weitere mögliche Außenkontur von Hohlräumen 4, die mit den erfindungsgemäßen Verfahren hergestellt wurden. Die Konturen der Hohlräume 4 sind jeweils im Wesentlichen dreieckig, was darauf zurückzuführen ist, dass die beim Aufweiten der ersten Bohrung 5 verwendeten Elektroden 10 kürzer als die halbe Breite B/2 zwischen den Plattformseitenflächen 6 und 7 gewählt wurde.

Es sei darauf hingewiesen, dass die erste Bohrung 5 nicht unbedingt als Durchgangsbohrung ausgestaltet sein muss. Ebenso ist es möglich, anstelle einer durchgehenden ersten Bohrung 5 jeweils eine Anfangsbohrung sowohl ausgehend von der ersten Plattformseitenfläche 6 als auch von der zweiten Plattformseitenfläche 7 zu erzeugen, um daraufhin die beiden Bohrungen fächerförmig aufzuweiten.

## Patentansprüche

1. Verfahren zur Herstellung eines Hohlraums (4) in einer Schaufelplattform (3) einer Schaufel (1), insbesondere einer Turbinenschaufel, als Teil eines Schaufelplattformkühlsystems, wobei das Verfahren die Schritte aufweist:
a) Herstellen einer ersten Bohrung (5) ausgehend von einer ersten Plattformseitenfläche (6) in Richtung einer gegenüberliegenden zweiten Plattformseitenfläche (7) unter Erzeugung einer ersten Öffnung (8) in der ersten Plattformseitenfläche (6),
**gekennzeichnet durch**
b) fächerartiges Aufweiten der ersten Bohrung (5) mittels eines Funkenerosionsverfahrens unter Verwendung einer draht- oder stabförmigen Elektrode (10), derart, dass die in Schritt a) erzeugte erste Öffnung (8) der ersten Bohrung (5) den Ausgangspunkt der fächerartigen Aufweitung darstellt.

2. Verfahren nach Anspruch 1,
**dadurch gekennzeichnet, dass**
in Schritt b) ausgehend von der ersten Öffnung (8) der ersten Bohrung (5) eine Vielzahl weiterer Bohrungen (11) erzeugt wird, die jeweils einen vorbestimmten Winkelversatz (Δα) zueinander aufweisen, wobei benachbart angeordnete Bohrungen (5, 11) einander bereichsweise überlappen, oder dass in Schritt b) die in die erste Öffnung (8) der ersten Bohrung (5) eingeführte Elektrode (10) fächerartig geschwenkt wird.

3. Verfahren nach Anspruch 2,
**dadurch gekennzeichnet, dass**
die Tiefe der ersten Bohrung (5) und ggf. der weiteren Bohrungen (11) jeweils über eine gedachte Mittelebene (E) wischen der ersten Plattformseitenfläche (6) und der zweiten Plattformseitenfläche (7) hinausgehen.

4. Verfahren nach einem der vorhergehenden Ansprüche,
**dadurch gekennzeichnet, dass**
eine Bohrung (5) hergestellt wird, die eine zweite Öffnung (9) in der ersten und/oder zweiten Plattformseitenfläche (7) erzeugt und sich ausgehend von dieser zweiten Öffnung (9) in Richtung der gegenüberliegenden Plattformseitenfläche (6) erstreckt, und dass die Bohrung (5) mittels eines Funkenerosionsverfahrens, insbesondere unter Verwendung einer draht- oder stabförmigen Elektrode (10), derart fächerartig aufgeweitet wird, dass die zweite Öffnung (9) den Ausgangspunkt der fächerartigen Aufweitung darstellt.

5. Verfahren nach Anspruch 4,
**dadurch gekennzeichnet, dass**
im Rahmen der fächerartigen Aufweitung ausgehend von der in der ersten bzw. zweiten Plattformseitenfläche (7) erzeugten zweiten Öffnung (9) eine Vielzahl weiterer Bohrungen (11) erzeugt wird, die jeweils einen vorbestimmten Winkelversatz (Δα) zueinander aufweisen, wobei benachbart angeordnete Bohrungen (5, 11) einander bereichsweise überlappen, oder dass im Rahmen der fächerartigen Aufweitung die ausgehend von der zweiten Öffnung (9) in die Bohrung (5) eingeführte Elektrode (10) fächerartig geschwenkt wird .

6. Verfahren nach Anspruch 5,
**dadurch gekennzeichnet, dass**
die Tiefe der Bohrung (5) bzw. der Bohrungen (5, 11) jeweils über eine gedachte Mittelebene (E) zwischen der zweiten Plattformseitenfläche (7) und der ersten Plattformseitenfläche (6) hinausgehen.

7. Verfahren nach einem der Ansprüche 4 bis 6,
**dadurch gekennzeichnet, dass**
die von den gleichen bzw. unterschiedlichen Plattformseitenflächen (6, 7) durchgeführten fächerartigen Aufweitungen einen gemeinsamen Hohlraum (4) definieren.

8. Verfahren nach einem der vorhergehenden Ansprüche,
**dadurch gekennzeichnet, dass**
zumindest die Schaufelplattform (3) aus einer Superlegierung hergestellt ist, insbesondere aus einer auf Nickel basierenden Superlegierung.

9. Schaufel (1), insbesondere Turbinenschaufel,
mit einem Schaufelblatt (2) und zumindest einer mit dem Schaufelblatt (2) verbundenen Schaufelplattform (3), in der zumindest ein Hohlraum (4) ausgebildet ist,
wobei der zumindest eine Hohlraum (4) einen Teil eines Schaufelplattformkühlsystems bildet,
**dadurch gekennzeichnet, dass**
die der Hohlraum (4) entweder eine im Wesentlichen dreieckige oder eine im Wesentlichen rautenförmige oder eine im Wesentlichen sternförmige Außenkontur aufweist.

10. Schaufel (1) nach Anspruch 9,
**dadurch gekennzeichnet, dass**
zumindest einer der durch aufeinandertreffende Seitenwände des zumindest einen Hohlraums (4) gebildeten Eckbereiche eine Öffnung (7, 8) in einer Plattformseitenfläche (6, 7) definiert.

11. Schaufel nach Anspruch 9 oder 10,
**dadurch gekennzeichnet, dass**
der zumindest eine Hohlraum (4) fluidtechnisch mit einem Schaufelblatthohlraum verbunden ist.

12. Schaufel nach einem der Ansprüche 9 bis 11,
**dadurch gekennzeichnet, dass**
zumindest die Schaufelplattform (3) aus einer Superlegierung hergestellt ist, insbesondere aus einer auf Nickel basierenden Superlegierung.

## Claims

1. Method for producing a cavity (4) in a blade platform (3) of a blade (1), in particular of a turbine blade, as part of a blade platform cooling system, wherein the method has the steps:
a) producing a first bore (5) starting from a first platform side surface (6) in the direction of an opposite second platform side surface (7), generating a first opening (8) in the first platform side surface (6),
**characterized by**
b) widening the first bore (5) in a fan-like fashion by means of a spark erosion method using an electrode (10) in the form of a wire or rod, in such a way that the first opening (8), generated in step a), of the first bore (5) represents the starting point of the fan-like widening.

2. Method according to Claim 1, **characterized in that**, in step b), starting from the first opening (8) of the first bore (5), a plurality of further bores (11) are generated which each have a predetermined angular offset (Δα) with respect to one another, wherein bores adjacently arranged (5, 11) overlap each other in some regions, or **in that**, in step b), the electrode (10) inserted into the first opening (8) of the first bore (5) is pivoted in a fan-like fashion.

3. Method according to Claim 2, **characterized in that** the depth of the first bore (5) and possibly the other bores (11) in each case extend beyond an imaginary central plane (E) between the first platform side surface (6) and the second platform side surface (7).

4. Method according to one of the preceding claims, **characterized in that** a bore (5) is produced which generates a second opening (9) in the first platform side surface and/or in the second platform side surface (7) and which extends, starting from this second opening (9), toward the opposite platform side surface (6), and **in that** the bore (5) is widened in a fan-like fashion by means of a spark erosion method, in particular using an electrode (10) in the form of a wire or rod, in such a way that the second opening (9) represents the starting point of the fan-like widening.

5. Method according to Claim 4, **characterized in that**, as part of the fan-like widening, starting from the second opening (9) generated in the first or second platform side surface (7), a plurality of further bores (11) are generated which each have a predetermined angular offset (Δα) relative to one another, wherein adjacently arranged bores (5, 11) overlap one another in some regions, or **in that**, as part of the fan-like widening, the electrode (10) inserted into the bore (5) starting from the second opening (9) is pivoted in a fan-like fashion.

6. Method according to Claim 5, **characterized in that** the depth of the bore (5) or the bores (5, 11) in each case extend beyond an imaginary central plane (E) between the second platform side surface (7) and the first platform side surface (6) .

7. Method according to one of Claims 4 to 6, **characterized in that** the fan-like widenings effected by the same or different platform side surfaces (6, 7) define a common cavity (4) .

8. Method according to one of the preceding claims, **characterized in that** at least the blade platform (3) is produced from a superalloy, in particular from a nickel-based superalloy.

9. Blade (1), in particular turbine blade, having a blade leaf (2) and at least one blade platform (3), in which at least one cavity (4) is formed, connected to the blade leaf (2), wherein the at least one cavity (4) forms part of a blade platform cooling system, **characterized in that** the cavity (4) has either an essentially triangular or an essentially diamond-shaped or an essentially star-shaped outer contour.

10. Blade (1) according to Claim 9, **characterized in that** at least one of the corner regions, formed by abutting side walls of the at least one cavity (4), defines an opening (7, 8) in a platform side surface (6, 7).

11. Blade according to Claim 9 or 10, **characterized in that** the at least one cavity (4) is fluidically connected to a blade leaf cavity.

12. Blade according to one of Claims 9 to 11, **characterized in that** at least the blade platform (3) is produced from a superalloy, in particular from a nickel-based superalloy.

## Revendications

1. Procédé de production d'une cavité (4) dans une plateforme (3) d'une aube (1), notamment d'une aube de turbine, comme partie d'un système de refroidissement de la plateforme de l'aube, dans lequel le procédé a les stades :
a) production d'un premier trou (5) à partir d'une première surface (6) latérale de la plateforme, en direction d'une deuxième surface (7) latérale opposée de la plateforme, en produisant une première ouverture (8) dans la première surface (6) latérale de la plateforme,
**caractérisé par**
b) élargissement en éventail du premier trou (5) au moyen d'un procédé d'usinage par étincelage en utilisant une électrode (10) sous forme de fil ou de barreau, de manière à ce que la première ouverture (8), produite au stade a), du premier trou (5) représente le point de départ de l'élargissement en éventail.

2. Procédé suivant la revendication 1,
**caractérisé en ce que**
au stade b), on produit à partir de la première ouverture (8) du premier trou (5), une pluralité d'autres trous (11), qui ont chacun les uns par rapport aux autres un décalage (Δα) angulaire défini à l'avance, des trous (5, 11) voisins l'un de l'autre se chevauchant par endroits ou **en ce que** au stade b), on fait pivoter en éventail l'électrode (10) introduite dans la première ouverture (8) du premier trou (5).

3. Procédé suivant la revendication 2,
**caractérisé en ce que**
la profondeur du premier trou (5) et le cas échéant, des autres trous (11), va au-delà respectivement d'un plan (E) médian imaginaire entre la première surface (6) latérale de la plateforme et la deuxième surface (7) latérale de la plateforme.

4. Procédé suivant l'une des revendications précédentes,
**caractérisé en ce que**
l'on produit un trou (5), qui produit une deuxième ouverture (9) dans la première et/ou dans la deuxième surface (7) latérale de la plateforme et qui s'étend à partir de cette deuxième ouverture (9) en direction de la surface (6) latérale opposée de la plateforme, et **en ce que** l'on élargit en éventail le trou (5) au moyen d'un procédé d'usinage par étincelage, notamment en utilisant une électrode (10) en forme de fil ou de barreau, de manière à ce que la deuxième ouverture (9) représente le point de départ de l'élargissement en éventail.

5. Procédé suivant la revendication 4,
**caractérisé en ce que**
dans le cadre de l'élargissement en éventail, on produit, à partir de la deuxième ouverture (9) produite dans la première ou dans la deuxième surface (7) latérale de la plateforme, une pluralité d'autres trous (11), qui ont chacun un décalage (Δα) angulaire défini à l'avance les uns par rapport aux autres, dans lequel des trous (5, 11) voisins se chevauchent l'un l'autre par endroits ou **en ce que**, dans le cadre de l'élargissement en éventail, on fait pivoter en éventail l'électrode (10) introduite à partir de la deuxième ouverture (9) dans le trou (5).

6. Procédé suivant la revendication 5,
**caractérisé en ce que**
la profondeur du trou (5) ou des trous (5, 11) va au-delà respectivement d'un plan (E) médian imaginaire entre la deuxième surface (7) de la plateforme et la première surface (6) latérale de la plateforme.

7. Procédé suivant l'une des revendications 4 à 6,
**caractérisé en ce que**
les élargissements en éventail effectués à partir des mêmes ou de surfaces (6, 7) latérales différentes de la plateforme définissent des élargissements d'une cavité (4) commune.

8. Procédé suivant l'une des revendications précédentes,
**caractérisé en ce que**
au moins la plateforme (3) de l'aube est en un super alliage, notamment en un super alliage à base de nickel.

9. Aube (1), notamment aube de turbine, comprenant un corps (2) d'aube et au moins une plateforme (3) d'aube reliée au corps (2) de l'aube, dans laquelle est constituée au moins une cavité (4),
dans laquelle la au moins une cavité (4) forme une partie d'un système de refroidissement de la plateforme de l'aube, **caractérisée en ce que**
la cavité (4) a un contour extérieur sensiblement en triangle ou un contour extérieur sensiblement en forme de losange ou un contour extérieur sensiblement en forme d'étoile.

10. Aube (1) suivant la revendication 9,
**caractérisée en ce que**
au moins l'une des parties de coin formées par des parois latérales se rencontrant de la au moins une cavité (4) définit une ouverture (7, 8) d'une surface (6, 7) latérale de la plateforme.

11. Aube suivant la revendication 9 ou 10,
**caractérisée en ce que**
la au moins une cavité (4) communique en technique des fluides avec une cavité du corps de l'aube.

12. Aube suivant l'une des revendications 9 à 11,
**caractérisée en ce que**
au moins la plateforme (3) de l'aube est en un super alliage, notamment en un super alliage à base de nickel.
